# EUROPÄISCHE PATENTANMELDUNG

(11) **EP 2 181 915 A1**
(43) Veröffentlichungstag der Anmeldung: **05.05.2010**
(21) Anmeldenummer: 09168991.9
(22) Anmeldetag: 31.08.2009
(51) Int. Cl.: B62D 55/02

(54) **Dolly-Achse und diese verwendender Fahrzeugverband**

(30) Priorität: 28.10.2008 DE 102008053538
(71) Anmelder: CLAAS Selbstfahrende Erntemaschinen GmbH, 33428 Harsewinkel (DE)
(72) Erfinder: Nacke, Dr., Eberhard, 33332 Gütersloh (DE)

(57) **Zusammenfassung**

Eine Dolly-Achse (3) hat ein Fahrgestell (9) mit mehreren Rädern (5, 22), eine Deichsel (2) zum Verbinden mit einer Zugmaschine (1) und einen Sattel (8) zum Aufnehmen eines Sattelanhängers (4), Wenigstens einige der Räder sind von wenigstens einem Raupenband (7) umschlungen.

## Beschreibung

Die vorliegende Erfindung betrifft eine Dolly-Achse und einen Fahrzeugverband, in der die Dolly-Achse mit anderen Fahrzeugen kombiniert ist.

Eine Dolly-Achse, die es ermöglicht, einen Sattelanhänger mit Hilfe eines Traktors zu schleppen, ist zum Beispiel aus US 5 284 356 bekannt. Sie umfasst ein Fahrgestell mit einer oder zwei Radachsen, eine Deichsel zum Verbinden des Fahrgestells mit dem Traktor und einen Sattel, auf dem das Vorderteil eines Sattelanhängers platzierbar ist. Es wird vorgeschlagen, einen Fahrzeugverband aus Traktor, Dolly-Achse und Sattelanhänger einzusetzen, um Korn von einem Feld zu einem Lager oder auf den Markt zu befördern. Ein Sattelanhänger ist im Allgemeinen ausgelegt, um große Lasten im Straßenverkehr zu befördern. Auf einer Ackerfläche besteht die Gefahr, dass der Sattelanhänger einsackt und stecken bleibt. Da es schwierig ist, den Anhänger auf dem Feld zu bewegen, wird erst, wenn der Anhänger voll ist, die Dolly-Achse untergeschoben und der Anhänger vom Feld gezogen. Der Straßentransport mit Hilfe des Traktors ist wenig wirtschaftlich, da die Höchstgeschwindigkeit des Traktors wesentlich niedriger ist als die eines Sattelschleppers und der Kraftstoffverbrauch hoch ist.

Eine Aufgabe der vorliegenden Erfindung ist, eine Dolly-Achse zu schaffen, die die Feldgängigkeit eines auf ihr aufliegenden Sattelanhängers verbessert.

Diese Aufgabe wird gelöst, indem bei einer Dolly-Achse der eingangs beschriebenen Art das Fahrgestell von wenigstens einem Raupenband umschlungene Räder aufweist. Das Raupenband vergrößert die Kontaktfläche der Dolly-Achse zum Boden erheblich und vermindert dadurch die Gefahr des Einsinkens. Auch eine unerwünschte Verdichtung des befahrenen Bodens wird durch die große Kontaktfläche vermieden oder zumindest erheblich vermindert.

Als Raupenband kann eine an sich bekannte Raupenkette mit untereinander gelenkig verbundenen metallischen Gliedern verwendet werden. Bevorzugt ist jedoch die Verwendung eines gliederlosen Riemens. Ein solcher Riemen kann ähnlich wie die Lauffläche eines Reifens aufgebaut sein, das heißt, er kann in Gummi eingebettete Lagen aus Stahl und Gewebe aufweisen.

Die Anhängerkupplung kann in einem einfachen und robusten Aufbau drehfest mit dem Fahrgestell verbunden sein. Dies zwingt die Raupenbänder, beim Durchfahren einer Kurve einer Drehung der Deichsel sofort zu folgen. Um dies mit geringen Reibungsverlusten zu ermöglichen, sind vorzugsweise ein linkes und ein rechtes Raupenband des Fahrgestells mit unterschiedlichen Geschwindigkeiten umlaufend beweglich.

Das Fahrgestell kann zusätzlich auch eine Achse mit nicht von einem Raupenband umschlungenen Rädern aufweisen. In diesem Fall kann die Dolly-Achse gelenkt werden, indem die Deichsel in Bezug auf das Fahrgestell schwenkbar ist und die nicht umschlungenen Räder lenkbar an die Deichsel gekoppelt sind.

Um die Feldgängigkeit des Anhängers weiter zu verbessern, kann die Dolly-Achse mit Mitteln zum Antreiben des Raupenbandes versehen sein. So braucht nicht die gesamte zum Ziehen des Anhängers erforderliche Kraft über die Räder einer vorgespannten Zugmaschine auf den Boden übertragen zu werden, und die Gefahr, dass die Räder der Zugmaschine durchdrehen, ist verringert.

Um das Fahren in einer Kurve zu erleichtern, umfassen die Mittel zum Antreiben vorzugsweise ein Ausgleichsgetriebe, das einen unterschiedlich schnellen Umlauf der zwei Raupenbänder ermöglicht.

Als eine weitere Maßnahme, die das Fahren von Kurven erleichtert, kann ein Getriebe mit veränderbarer Übersetzung vorgesehen werden, das an zwei Abtriebswellen des Ausgleichsgetriebes koppelbar ist. Durch ein solches Getriebe können die Ketten gezwungen werden, mit unterschiedlichen Geschwindigkeiten umzulaufen, wodurch an der Dolly-Achse selbst ein Drehmoment erzeugt wird, das die Kurvenfahrt unterstützt.

Die Übersetzung des Getriebes mit veränderbarer Übersetzung ist zweckmäßigerweise durch eine Auslenkung der Anhängerkupplung in Bezug auf das Fahrgestell gesteuert.

Gegenstand der Erfindung ist ferner ein Fahrzeugverband, in dem die Dolly-Achse mit einem auf ihr aufliegenden Sattelanhänger und/oder mit einer Zugmaschine kombiniert ist.

Bei der Zugmaschine handelt es sich vorzugsweise um ein selbst fahrendes Erntefahrzeug. Dies ermöglicht einen hoch effizienten Erntebetrieb, da das Erntefahrzeug, während es den Sattelanhänger zieht, geerntetes Gut unmittelbar in den Anhänger überladen kann. Eine Unterbrechung des Erntebetriebs, um einen eingebauten Ernteguttank des Erntegutfahrzeugs zu entleeren, ist überflüssig. Wenn der Anhänger voll ist, kann er vom Erntefahrzeug abgekoppelt und von einer besser als dieses an den Straßenverkehr angepassten Zugmaschine übernommen werden.

Dabei kann je nach Typ der Straßenzugmaschine entschieden werden, ob der Anhänger mitsamt der Dolly-Achse vom Erntefahrzeug abgekoppelt wird, oder ob letztere am Erntefahrzeug verbleiben und einen neuen Sattelanhänger aufnehmen soll.

Falls die Dolly-Achse auch für den Straßentransport verwendet werden soll, kann es zweckmäßig sein, diese konvertibel auszulegen, zum Beispiel indem die riemenumschlungenen Räder gegen straßengängige, nicht umschlungene Räder austauschbar sind, oder indem die Riemen abnehmbar und wenigstens einzelne der normalerweise riemenumschlungenen Räder auch für direkten Kontakt mit einer Straßenfahrbahndecke geeignet sind. Denkbar ist auch, alternative Radsätze für den Raupenbetrieb und für die Straßenfahrt verstellbar am Fahrgestell vorzusehen, so dass je nach Einsatzsituation einer der beiden Radsätze Bodenkontakt hat.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen erfindungsgemäßen Fahrzeugverband;
- Fig. 2: eine Draufsicht auf die Dolly-Achse des Fahrzeugverbands aus Fig. 1;
- Fig. 3: eine teilaufgeschnittene Draufsicht auf eine weiter entwickelte Ausgestaltung der Dolly-Achse;
- Fig. 4: eine teilaufgeschnittene Draufsicht auf eine dritte Ausgestaltung der Dolly-Achse;
- Fig. 5: eine Seitenansicht der Dolly-Achse gemäß einer vierten Ausgestaltung;
- Fig. 6: eine Draufsicht auf die Dolly-Achse der Fig. 5.
- Fig. 7: eine Seitenansicht der Dolly-Achse gemäß einer vierten Ausgestaltung; und
- Fig. 8: eine Seitenansicht der Dolly-Achse gemäß einer fünften Ausgestaltung.

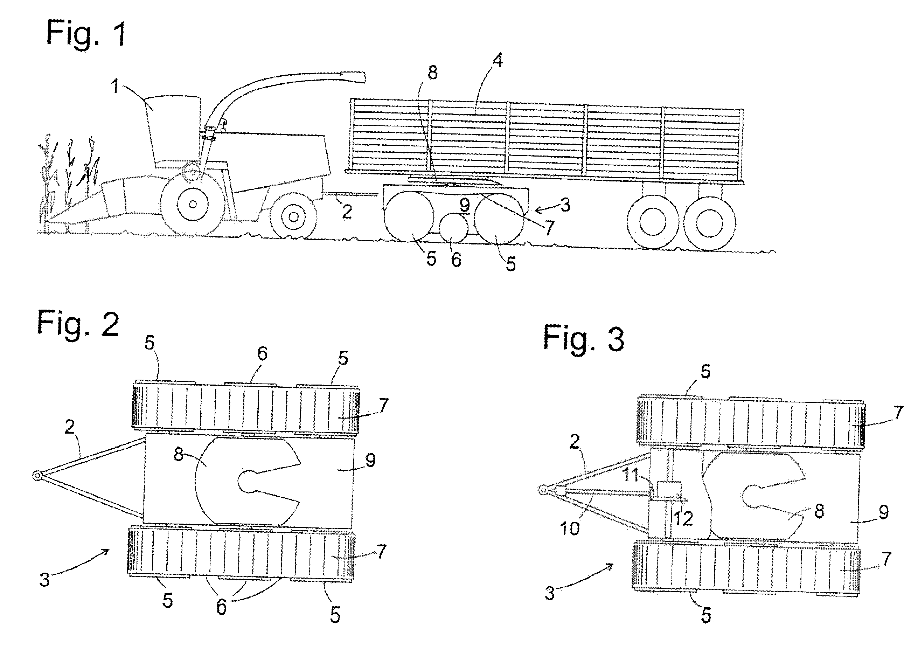

Der in Fig. 1 gezeigte Fahrzeugverband umfasst als Zugmaschine einen Feldhäcksler 1. Der Feldhäcksler zieht über eine Deichsel 2 eine Dolly-Achse 3. Die Dolly-Achse 3 hat an zwei Seiten ihres Fahrgestells 9 ein Raupenlaufwerk mit je zwei großformatigen Laufrollen 5, wenigstens einer Stützrolle 6 von kleinerem Durchmesser zwischen den zwei Laufrollen 5 und einem um die Rollen 5, 6 geschlungenen Raupenband 7. Je nach benötigter Tragfähigkeit der Dolly-Achse 3 und der Festigkeit des Bodens, auf dem sie eingesetzt wird, können die Raupenlaufwerke in unterschiedlicher Länge und ggf. mit mehr als einer Stützrolle 6 vorgesehen sein.

Die Dolly-Achse 3 stützt das Vorderteil eines Sattelanhängers 4 über einen an sich bekannten Auflagesattel 8.

Fig. 2 zeigt eine Draufsicht auf die Dolly-Achse mit Fahrgestell 9, Auflagesattel 8, Raupenbänder 7 und Deichsel 2. Die Deichsel 2 ist in Gierrichtung drehfest am Fahrgestell 9 angebracht, so dass das Fahrgestell 9 sofort folgen muss, wenn eine vorgespannte Zugmaschine in eine Kurve fährt. Dies ist möglich, da die nicht angetriebenen Raupenbänder 7 mit unterschiedlichen Umlaufgeschwindigkeiten und gegebenenfalls auch in entgegen gesetzte Richtungen bewegbar sind.

Wenn die Dolly-Achse nicht angetrieben ist, muss die Zugmaschine 1 die gesamte zum Ziehen der Dolly-Achse 3, des Anhängers 4 und von dessen Ladung benötigte Kraft in den Untergrund einkoppeln. Eine obere Grenze dieser Kraft ist proportional zum Gewicht des Zugfahrzeugs. Dieses Gewicht soll möglichst niedrig sein, um eine unerwünschte Verdichtung des Ackerbodens zu vermeiden. Es kann daher das Problem auftreten, dass der Anhänger 4 nicht voll beladen werden kann, weil dann die benötigte Zugkraft größer wird als die Kraft, die die Zugmaschine auf den Boden übertragen kann. Um dieses Problem zu vermeiden, ist gemäß einer in Fig. 3 in Draufsicht gezeigten Ausgestaltung die Dolly-Achse 3 mit eigenen Antriebsmitteln versehen, hier in Form einer nach vorn aus dem Fahrgestell 9 herausgeführten Welle 10, die an eine motorgetriebene Antriebswelle der Zugmaschine 1 ankoppelbar ist. Im Innern des Fahrgestells 9 treibt die Welle 10 zwei der Laufrollen 5 über ein Kegelrad 11 und ein Differentialgetriebe 12 an.

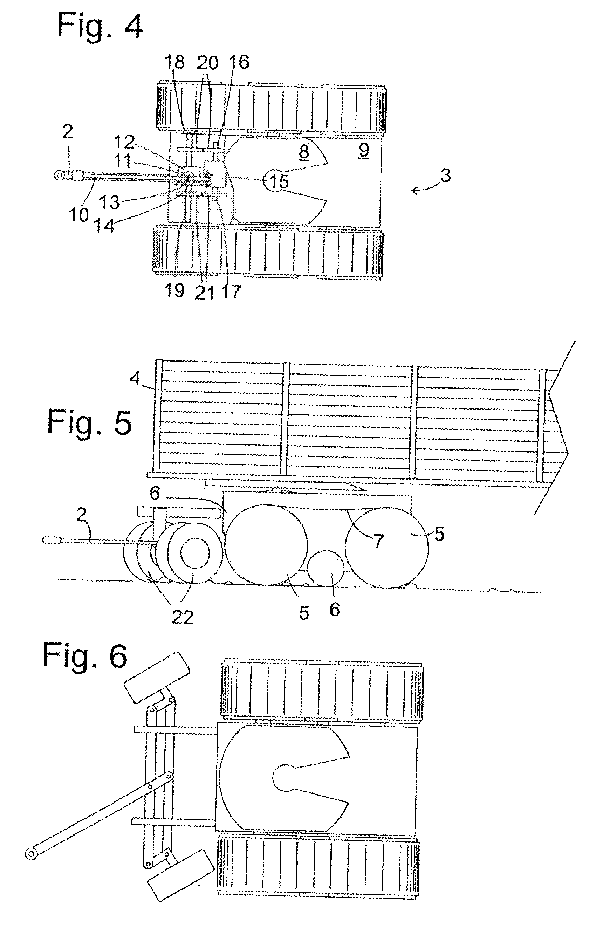

Fig. 4 zeigt in einer zu Fig. 3 analogen teilweise aufgeschnittenen Draufsicht eine Dolly-Achse 3 gemäß einer abermaligen Weiterbildung der Erfindung. Anstelle der starren Deichsel gemäß Fig. 2 oder 3 ist hier eine in Gierrichtung schwenkbare Deichsel 2 vorgesehen, und die oberhalb der Deichsel 2 und parallel zu dieser verlaufende Welle 10 ist ebenfalls schwenkbar. Die vertikal orientierte Schwenkachse 13 der Deichsel 2 und der Welle 10 kreuzt das Differentialgetriebe 12. Die Welle 10 verläuft oberhalb des Differentialgetriebes 12, und das Kegelrad 11 der Welle 10 treibt das Differentialgetriebe 12 über ein Doppelkegelrad 14 an, das um die Achse 13 drehbar ist.

Ein Getriebe 15 mit verstellbarer Übersetzung ist hinter dem Differentialgetriebe 12 angeordnet und hat zwei zueinander koaxiale Wellen 16, 17, die sich parallel zu Abtriebswellen 18, 19 des Differentialgetriebes 12 erstrecken. Die Abtriebswellen 18, 19 und die Wellen 16, 17 tragen miteinander kämmende Zahnradpaare 20, 21. Ein nicht dargestellter Stellhebel des Getriebes 15 ist an die Deichsel 2 oder an ein rückwärtiges Ende der Welle 10 gekoppelt. In der dargestellten Geradeausfahrt-Stellung von Welle 10 und Deichsel 2 hält der Stellhebel das Getriebe 15 in einem Neutralzustand, in dem die Wellen 16, 17 frei gegeneinander drehbar sind.

Das Getriebe 15 kann einer ersten Ausgestaltung zufolge ein Schaltgetriebe zwei diskreten Gängen, deren Übersetzungsverhältnisse invers zueinander sind, und einer Kupplung sein. Je nach Auslenkungsrichtung der Welle 10 oder der Deichsel 2 wird der eine oder der andere der beiden Gänge des Getriebes eingelegt, und die Kupplung schließt mit einem mit dem Ausmaß der Auslenkung in die eine oder andere Richtung zunehmenden Schließkraft. So prägt das Getriebe 15 den Abtriebswellen 18, 19 bei Kurvenfahrt unterschiedliche Drehmomente auf, so dass die unterschiedlich schnell umlaufenden Raupenbänder 7 ein die Kurvenfahrt unterstützendes, zur Auslenkung der Deichsel 2 proportionales Drehmoment auf das Fahrgestell 9 ausüben.

Anstelle eines Schaltgetriebes mit diskreten Gängen kann auch ein stufenlos veränderliches Getriebe als Getriebe 15 vorgesehen werden, zum Beispiel ein Kegelradgetriebe oder ein hydrostatischer Wandler, dessen Übersetzung durch die Auslenkung der Deichsel 2 oder Welle 10 verstellbar ist.

Eine weitere Ausgestaltung einer erfindungsgemäßen Dolly-Achse ist in Fig. 5 in Seitenansicht und in Fig. 6 in einer Draufsicht gezeigt. Bei dieser Ausgestaltung sind ein Raupenlaufwerk mit zwei über die Deichsel 2 lenkbaren, luftbereiften Rädern 22 kombiniert. Eine Einschlagbewegung der Räder 22 erleichtert die Kurvenfahrt der Dolly-Achse, auch wenn die Raupenlaufwerke nicht oder gleich stark angetrieben sind.

Die mit Bezug auf die Fig. 1 bis 6 beschriebenen Dolly-Achsen eignen sich besonders zum Schleppen eines Sattelanhängers 4 auf nachgiebigem Untergrund, insbesondere einem abzuerntendem Feld. Einer bevorzugten Anwendung zufolge wird die Dolly-Achse 3 daher eingesetzt, um einen Sattelanhänger 4 an ein Erntefahrzeug wie etwa den Feldhäcksler 1, einen Mähdrescher, einen Kartoffel- oder Rübenroder oder dergleichen anzukoppeln und das Erntegut während des Erntens fortlaufend, im Wesentlichen ohne Zwischenspeicherung auf dem Erntefahrzeug, auf den Anhänger 4 überzuladen. Wenn der Anhänger 4 voll ist, kann das Erntefahrzeug 1 selbst dazu eingesetzt werden, ihn zum Feldrand zu ziehen, wo er von einem Sattelschlepper übernommen wird und ein von dem Sattelschlepper zuvor hergefahrener leerer Anhänger auf die Dolly-Achse 3 aufgesetzt wird. Bei großen Feldflächen kommt auch in Betracht, eine Zugmaschine eigens für die Beförderung der Anhänger 4 zwischen dem Feldrand und sich auf der Feldfläche bewegenden Erntefahrzeugen 1 einzusetzen. In diesem Fall kann zwischen Erntefahrzeug und Zugmaschine ein Anhänger 4 jeweils mitsamt Dolly-Achse 3 ausgetauscht werden, während am Feldrand zum Umkoppeln an den Sattelschlepper der Anhänger 4 von der Dolly-Achse 3 getrennt wird.

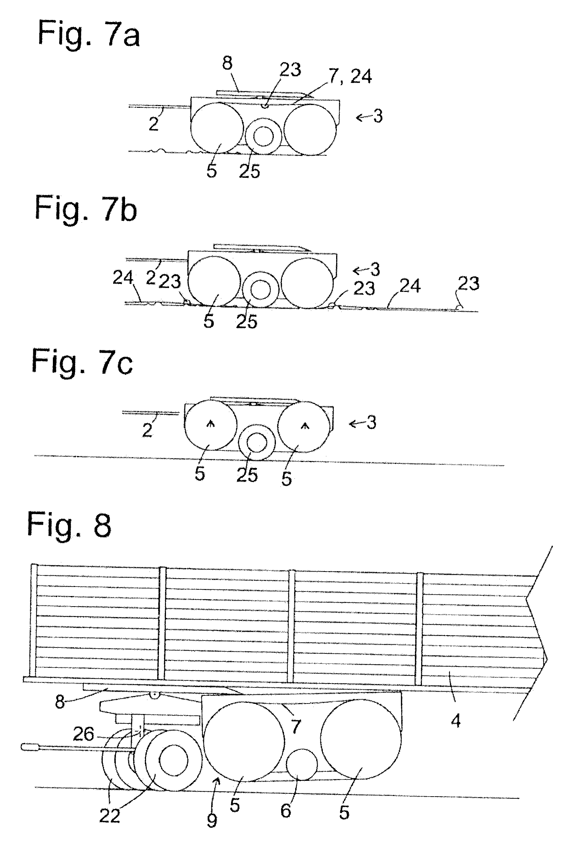

Da für einen Ernteeinsatz Erntefahrzeuge, Dolly-Achse und gegebenenfalls Zugmaschinen zwangsläufig von einem Stützpunkt zum Feld und nach getaner Arbeit wieder zum Stützpunkt zurückfahren müssen, ist es zweckmäßig, wenn die Fahrzeuge und die Dolly-Achse auf diesen Fahrten auch für die Beförderung eines Sattelanhängers eingesetzt werden können. Um die Straßengängigkeit der Dolly-Achse 3 zu verbessern, ist anhand einer in Fig. 7a bis 7c dargestellten Ausgestaltung vorgesehen, dass die Raupenbänder 7 wenigstens ein Kupplungselement 23 aufweisen und vorzugsweise aus mehreren durch Kupplungselemente 23 lösbar verbundenen segmenten 24 bestehen. So ist es möglich, nach Abschluss des Feldeinsatzes die Kupplungselemente 23 zu lösen und die Raupenbänder 7 zu entfernen (siehe Fig. 7b). Mit Ausnahme der mittleren, gummibereiften Laufrollen 25 sind die Rollen 5 höhenverstellbar. Wenn sie, wie in Fig. 7b gezeigt, angehoben werden, berühren nur noch die Laufrollen 25 den Boden. In diesem Zustand kann die Dolly-Achse 3 einschließlich eines aufliegenden Sattelanhängers 4 mit geringem Rollwiderstand und guter Manövrierbarkeit auf einer Straße gefahren werden.

Fig. 8 zeigt eine Abwandlung der Dolly-Achse der Fig. 5 und 6. Hier ist der Auflagesattel 8 in Längsrichtung des Fahrgestells 9 verschiebbar. Indem er für die Straßenfahrt nach vorn verschoben wird, verlagert sich das Gewicht des Sattelanhängers 4 von den Raupenlaufwerken auf die lenkbaren, gummibereiften Räder 22. Um bei der Straßenfahrt einen Kontakt der Raupenbänder 7 mit der Fahrbahn zu vermeiden, können die Raupenlaufwerke auch als Ganzes anhebbar sein, oder das Fahrgestell 9 ist um eine in Fahrzeugquerrichtung orientierte Achse 26 schwenkbar, um die Raupenlaufwerke vom Boden abzuheben.

### Bezugszeichen

- 1: Feldhäcksler
- 2: Deichsel
- 3: Dolly-Achse
- 4: Sattelanhänger
- 5: Laufrolle
- 6: Stützrolle
- 7: Raupenband
- 8: Auflagesattel
- 9: Fahrgestell
- 10: Welle
- 11: Kegelrad
- 12: Differentialgetriebe
- 13: Achse
- 14: Doppelkegelrad
- 15: Getriebe
- 16: Welle
- 17: Welle
- 18: Abtriebswelle
- 19: Abtriebswelle
- 20: Zahnradpaar
- 21: Zahnradpaar
- 22: Rad
- 23: Kupplungselement
- 24: Segment
- 25: Laufrolle
- 26: Achse

## Patentansprüche

1. Dolly-Achse (3) mit einem Fahrgestell (9) mit mehreren Rädern (5, 22), Mittel (2) zum Verbinden mit einer Zugmaschine (1) und einem Sattel (8) zum Aufnehmen eines Sattelanhängers (4), **dadurch gekennzeichnet, dass** das Fahrgestell von wenigstens einem Raupenband (7) umschlungene Räder (5) aufweist.

2. Dolly-Achse nach Anspruch 1, **dadurch gekennzeichnet, dass** das Raupenband (7) ein flexibler Riemen ist.

3. Dolly-Achse nach einem der vorhergehenden Ansprüche, **dadurch gekennzeichnet, dass** die Mittel (2) zum Verbinden mit einer Zugmaschine eine mit dem Fahrgestell (9) drehfest verbundene Deichsel (2) umfassen.

4. Dolly-Achse nach einem der vorhergehenden Ansprüche, **dadurch gekennzeichnet, dass** ein linkes und ein rechtes Raupenband (7) mit unterschiedlichen Geschwindigkeiten umlaufend beweglich sind.

5. Dolly-Achse nach einem der Ansprüche 1, 2 oder 4, **dadurch gekennzeichnet, dass** das Fahrgestell (9) eine Achse mit nicht von einem Raupenband umschlungenen Rädern (22) aufweist.

6. Dolly-Achse nach Anspruch 5, **dadurch gekennzeichnet, dass** die Mittel (2) zum Verbinden mit einer Zugmaschine eine in Bezug auf das die umschlungenen Räder (5) tragende Fahrgestell (9) schwenkbare Deichsel (2) umfassen und die nicht umschlungenen Räder (22) lenkbar an die Deichsel (2) gekoppelt sind.

7. Dolly-Achse nach einem der vorhergehenden Ansprüche, **gekennzeichnet durch** Mittel (10, 11, 12, 14, 15) zum Antreiben des Raupenbandes (7).

8. Dolly-Achse nach Anspruch 7 und Anspruch 4, **dadurch gekennzeichnet, dass** die Mittel zum Antreiben (10, 11, 12, 14, 15) ein Ausgleichsgetriebe (12) umfassen.

9. Dolly-Achse nach Anspruch 8, **dadurch gekennzeichnet, dass** zwei Abtriebswellen (18, 19) des Ausgleichsgetriebes (12) über ein Getriebe (15) mit veränderbarer Übersetzung koppelbar sind.

10. Dolly-Achse nach Anspruch 9, **dadurch gekennzeichnet, dass** die Übersetzung des Getriebes (15) mit veränderbarer Übersetzung durch eine Auslenkung der Deichsel (2) in Bezug auf das Fahrgestell (9) gesteuert ist.

11. Fahrzeugverband mit einer Dolly-Achse (3) nach einem der vorhergehenden Ansprüche und einem Sattelanhänger (4), von dem ein vorderer Bereich auf dem Sattel (8) aufliegt und ein hinterer Bereich eine Radachse aufweist.

12. Fahrzeugverband mit einer Dolly-Achse (3) nach einem der Ansprüche 1 bis 10 und einer Zugmaschine (1), **dadurch gekennzeichnet, dass** die Zugmaschine (1) ein selbstfahrendes Erntefahrzeug ist.

13. Verfahren zum Abernten eines Feldes mit einem Fahrzeugverband nach Anspruch 12, **dadurch gekennzeichnet, dass** das Erntefahrzeug (1) während des Aberntens einen Sattelanhänger (4) mit Hilfe der Dolly-Achse (3) schleppt und mit Erntegut befüllt.
